(19) Europäisches Patentamt

European Patent Office

Office européen des brevets

(11) **EP 1 024 672 A1**

(12) **EUROPEAN PATENT APPLICATION**
published in accordance with Art. 158(3) EPC

(43) Date of publication:
02.08.2000 Bulletin 2000/31

(51) Int. Cl.7: **H04N 13/04**

(21) Application number: 98905774.0

(86) International application number:
PCT/JP98/00910

(22) Date of filing: 04.03.1998

(87) International publication number:
WO 98/39927 (11.09.1998 Gazette 1998/36)

(84) Designated Contracting States:
DE FR GB

(30) Priority: 07.03.1997 JP 5338497
07.03.1997 JP 5338597
10.03.1997 JP 5496097

(71) Applicant:
Sanyo Electric Co., Ltd.
Moriguchi-shi, Osaka 570-8677 (JP)

(72) Inventors:
• YAMAMOTO, Yuji
Kyoto 614-8364 (JP)
• ABE, Yuzo
Osaka 573-0118 (JP)

(74) Representative:
Glawe, Delfs, Moll & Partner
Patentanwälte
Postfach 26 01 62
80058 München (DE)

(54) **DIGITAL BROADCAST RECEIVER AND DISPLAY**

(57)     A digital broadcast receiver and a display apparatus capable of reception in accordance with a plurality of broadcasting methods including a stereoscopic broadcasting method are obtained.

A frame memory (3) in a digital broadcast receiver (100) stores pixel data output from a decode circuit (2). Determining circuit (4) receives pixel data output from decode circuit 2, compares pixel data of a specific area (AR1) and pixel data of a specific area (AR2) of one frame with each other, and based on the result of comparison, determines whether the received video data is in accordance with the stereoscopic broadcasting method. Output signal formatting circuit (5) generates an output signal for displaying a video image on a monitor connected in a succeeding stage, using the pixel data stored in the frame memory 3, based on the result of determination.

FIG. 4

**Description**

Technical Field

The present invention relates to a digital broadcast receiver and a display apparatus and, more particularly, a digital broadcast receiver and a display apparatus capable of reception and display of a plurality of broadcasting methods including stereoscopic broadcasting method. Background Art

Conventionally, a digital broadcasting system in accordance with 525p progressive scanning method (hereinafter referred to as non-interlace digital broadcasting system) has been known as an example of the digital broadcasting system.

Details of such non-interlace digital broadcasting system is described, for example, in Urano et al., "Development of CS digital broadcasting system prototype for 525-progressive scanning signal", ITE Technical Report, Vol. 20, No. 13, pp. 25-30, published on February 27, 1996, and therefore detailed description thereof is not given here. The non-interlace digital broadcasting system provides broadcasting service using video data corresponding to non-interlace scanning method which is different from the current interlace scanning method (NTSC).

Another example of the digital broadcasting system is digital stereoscopic broadcasting system providing stereoscopic broadcasting service.

As described above, a plurality of different types of digital broadcasting services are available to users.

By the conventional digital stereoscopic broadcasting system, however, it is not possible to receive video data transmitted/received by the conventional non-interlace digital broadcasting system. By the conventional non-interlace digital broadcasting system, it is not possible to receive video data transmitted/received by the digital stereoscopic broadcasting system (hereinafter referred to as video data corresponding to stereoscopic broadcasting method), either.

Therefore, to receive the common broadcasting service and the stereoscopic broadcasting service, for example, a user (receiving side) must have a tuner corresponding to the non-interlace digital broadcasting system and a tuner corresponding to the digital stereoscopic broadcasting system, of which facilities and circuit configurations are of considerably large scale.

As regards stereoscopic display, there are various methods of stereoscopic display including a method of stereoscopic display using video images of one channel (for example, CRT stereoscopic display method employing binoculars opened/closed by liquid crystal shutters) and a method of stereoscopic display using video images of two channels (for example, stereoscopic display employing two projectors).

The method of stereoscopic display available for a conventional receiver for the digital stereoscopic broadcasting system, however, is generally limited to only one method of stereoscopic display. Namely, one receiver is not compatible with a plurality of stereoscopic display methods.

Therefore, the conventional digital stereoscopic broadcasting system has a disadvantage that user's selection of the stereoscopic display is limited.

At present, while broadcasting services of various broadcasting methods exists mixedly, there is not a display device which can meet all the broadcasting methods.

When a display apparatus which can meet a plurality of broadcasting methods including the stereoscopic broadcasting method is configured, for example, it is necessary to notify to the user that a stereoscopic reproduction display is given and to suggest that the user should wear special binocular for stereoscopic reproduction display, when stereoscopic reproduction is to be displayed.

Disclosure of the Invention

Therefore, an object of the present invention is to provide a digital broadcast receiver capable of receiving a plurality of broadcasting methods including stereoscopic broadcasting method.

Another object of the present invention is to provide a digital broadcast receiver capable of providing stereoscopic broadcasting service and common broadcasting service by a simple facility and simple circuit configuration.

The present invention provides a digital broadcast receiver including a receiving circuit demodulating and decompressing received video data and outputting pixel data, and a determining circuit detecting characteristics of the video data received by the receiving circuit and determining whether the received data is the video data in accordance with the stereoscopic broadcasting method, in response to the result of detection.

Further, the digital broadcast receiver in accordance with the present invention includes a receiving circuit demodulating and decompressing received video data and outputting pixel data, and a determining circuit determining whether the video data is the video data corresponding to the stereoscopic broadcasting method, based on the pixel data output from the receiving circuit.

More preferably, the determining circuit includes a storing circuit receiving and storing pixel data of a specific area of a first block constituting the video data, and pixel data of a specific area of a second block corresponding to the specific area of the first block constituting the video data from the receiving circuit, and a processing circuit comparing the pixel data of the specific area of the first block stored in the storing circuit with the pixel data of the specific area of the second block stored in the storing circuit, for determining and outputting whether the received video data is the first video data or the second video data.

Therefore, a main advantage of the present invention is that by analyzing the received video data, it is possible to determine whether the data is the video data in accordance with the stereoscopic broadcasting method or video data in accordance with the common broadcasting method.

Further, by utilizing the result of determination of the broadcasting method, the received video data can appropriately be displayed on the monitor.

Therefore, broadcasting using one channel of transmission line which can meet both stereoscopic broadcasting and common broadcasting is possible.

Accordingly, stereoscopic broadcasting service and common broadcasting service can be realized by the simple facility and simple circuit configuration.

A further object of the present invention is to provide a display apparatus which is capable of reproducing and displaying in accordance with a plurality of broadcasting methods including stereoscopic broadcasting method and capable of notifying to the user the broadcasting method of the video images to be reproduced and displayed.

More specifically, the present invention provides in accordance with another aspect a display apparatus compatible with a plurality of broadcasting methods, including a separating circuit separating and outputting a synchronizing signal from the received video signal, a determining circuit determining whether the video signal is the video signal in accordance with the stereoscopic broadcasting method, based on the synchronizing signal output from the separating circuit, and display circuit displaying, for the user, whether the broadcasting method of the received video signal is the stereoscopic broadcasting method, based on the result of determination by the determining circuit.

Further, the present invention provides a display apparatus receiving at an input a first video signal or a second video signal and reproducing and displaying on a monitor in accordance with the broadcasting method, including a separating circuit separating and outputting a synchronizing signal from the input first video signal in response to reception of the first video signal, a determining circuit determining, based on the synchronizing signal, whether the video signal to be reproduced and displayed on the monitor is the first video signal in accordance with a first broadcasting method or the first video signal in accordance with a second broadcasting method different from the first broadcasting method, and determining, when the synchronizing signal is not received from the separating circuit, that the video signal reproduced and displayed on the monitor is the second video signal in accordance with the broadcasting method different from the first and second broadcasting methods, a display circuit displaying the broadcasting method of the first or second video signal to be reproduced and displayed on the monitor in accordance with the result of determination by the determining circuit, and a reproducing and displaying circuit for reproducing and displaying the first or second video signal on the monitor, in accordance with the broadcasting method determined by the determining circuit.

Therefore, an additional advantage of the present invention is that the broadcasting method of the video signal can be determined based on the synchronizing signal of the video signal.

Further, as the result of determination is displayed, it is possible for the user to visually recognize the broadcasting method of the video image (especially, stereoscopic broadcasting method) to be reproduced and displayed.

Further, utilizing the result of determination of the broadcasting method, appropriate display can be given on a monitor connected to a succeeding stage.

A still further object of the present invention is to provide a digital broadcast receiver compatible with a plurality of broadcasting methods and, regarding the stereoscopic broadcasting method, capable of reproducing and displaying video images in accordance with the stereoscopic display method designated by the user.

More specifically, the present invention provides, according to a still further aspect, a digital broadcast receiver compatible with a plurality of stereoscopic display methods, including a receiving circuit demodulating and decompressing received video data, and a formatting circuit formatting, based on one stereoscopic display method selected by the user, signals output from the receiving circuit.

Further, the present invention provides a digital broadcast receiver compatible with a plurality of display methods including a plurality of stereoscopic display methods, including a receiving circuit demodulating and decompressing received video data, and a formatting circuit formatting signals output from the receiving circuit, the formatting circuit formatting, when the received video data is the video data in accordance with the stereoscopic broadcasting method, the signals in accordance with the stereoscopic display method selected by the user, and when the received video data is different from the video data in accordance with the stereoscopic broadcasting method, formatting the signals in accordance with the display method corresponding to the broadcasting method of the received video data, regardless of the user's selection.

Further, the present invention provides a digital broadcast receiver compatible with a plurality of display methods including a plurality of stereoscopic display methods, including a receiving circuit demodulating and decompressing received video data, a determining circuit determining whether the received video data is video data in accordance with the stereoscopic broadcasting method or video data different from the stereoscopic broadcasting method, a selecting circuit allowing the user to select one stereoscopic display method among the plurality of stereoscopic display methods, a formatting circuit formatting signals output from the receiving circuit, and a control circuit determining the method of display for reproducing and displaying the received video data based on the result of determination by the determining circuit and the selection by the selecting circuit, and controlling formatting by the formatting circuit.

Therefore, a still further advantage of the present invention is that reproduction and display in accordance with a plurality of display methods are possible, based on the result of determination of the broadcasting method as well as user's designation.

Further, for stereoscopic display, it is possible to generate video signals in accordance with the stereoscopic display method designated by the user. Therefore, various broadcasting services including stereoscopic broadcasting service can be provided by a simple facility and simple circuit configuration.

Brief Description of the Drawings

Figs. 1A and 1B represent image configurations of video data received by the digital broadcast receiver in accordance with a first embodiment of the present invention.

Fig. 2 is a schematic block diagram representing an example of a basic configuration of a transmitting side of digital stereoscopic broadcasting system 900.

Figs. 3A to 3C are illustrations representing an operation of a transmitting side frame memory apparatus of digital stereoscopic broadcasting system 900.

Fig. 4 is a schematic block diagram representing a basic configuration of a digital broadcast receiver 100 in accordance with the first embodiment of the present invention.

Fig. 5 is an illustration representing an object of a determining process in a determining circuit 4 in accordance with the first embodiment of the present invention.

Figs. 6A and 6B represent an example of relation between a specific area AR1 and a specific area AR2 which are subjected to the determining process by determining circuit 4 in accordance with the first embodiment of the present invention.

Fig. 7 is a block diagram representing an example of a basic configuration of determining circuit 4 in accordance with the first embodiment of the present invention.

Fig. 8 is a flow chart representing the determining process procedure in the determining circuit 4 in accordance with the first embodiment of the present invention.

Fig. 9 is a schematic block diagram representing a basic configuration of a digital broadcast receiver 200 in accordance with a second embodiment of the present invention.

Fig. 10 is a block diagram representing an example of basic configuration of an output signal formatting circuit 25 in accordance with the second embodiment of the present invention.

Fig. 11 is a time chart representing the formatting process in accordance with the second embodiment of the present invention.

Figs. 12A to 12D are illustrations representing formats of video signals corresponding to respective display methods output from the output signal formatting circuit 25 in accordance with the second embodiment of the present invention.

Figs. 13A to 13E represent other examples of video data configurations corresponding to the stereoscopic broadcasting methods received by digital broadcast receiver 200 in accordance with the second embodiment of the present invention.

Figs. 14A to 14C represent image configurations of video data received by the display apparatus in accordance with a third embodiment of the present invention.

Fig. 15 is a schematic block diagram representing a basic configuration of a receiving side, focusing on display apparatus 300 in accordance with the third embodiment of the present invention.

Figs. 16A and 16B are schematic illustrations of video signal formats input through a signal line L11 in accordance with the third embodiment of the present invention.

Fig. 17 is a schematic block diagram representing a basic configuration of a determining circuit 34 in accordance with a third embodiment of the present invention.

Figs. 18A to 18F are timing charts representing processing in the determining circuit 34 in accordance with the third embodiment of the present invention.

Fig. 19 is a flow chart representing the determining process procedure in determining circuit 34 in accordance with the third embodiment of the present invention.

Fig. 20 is a block diagram representing an example of the basic configuration of a broadcasting method display circuit 35 in accordance with the third embodiment of the present invention.

Fig. 21 is a block diagram representing an example of the basic configuration of a video reproducing and displaying unit 36 in accordance with the third embodiment of the present invention.

Best Modes for Carrying Out the Invention

(First Embodiment)

The first embodiment of the present invention is to enable a digital broadcast receiver to receive and reproduce in accordance with a plurality of broadcasting methods including stereoscopic broadcasting method.

The digital broadcast receiver in accordance with the first embodiment of the present invention receives video data provided by a non-interlace digital broadcasting system (hereinafter referred to as broadcasting method 1) or video data in accordance with a stereoscopic broadcasting method provided by a digital stereoscopic broadcasting system, which will be described later.

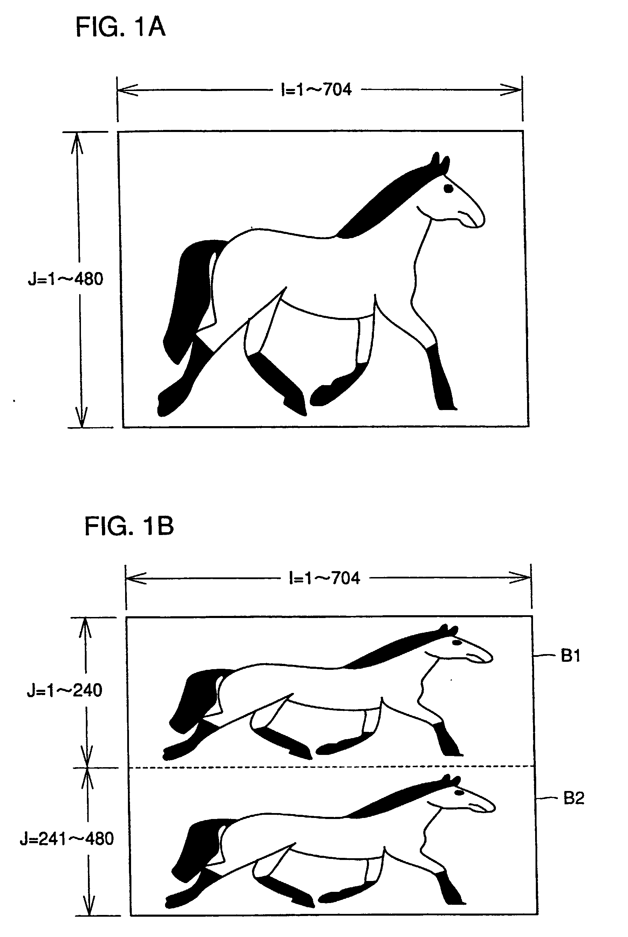

The video data received by the digital broadcast receiver in accordance with the first embodiment of the present invention will be described with reference to Figs. 1A and 1B.

Figs. 1A and 1B represent image configurations of video data received by the digital broadcast receiver in accordance with the first embodiment of the present invention, in which Fig. 1A represents an image of the video data in accordance with the broadcasting method 1, and Fig. 1B represents an image of video data in accordance with the stereoscopic broadcasting method.

Referring to Figs. 1A and 1B, the image (Fig. 1A) of the video data in accordance with broadcasting method 1 and the image (Fig. 1B) of the video data in accordance with the stereoscopic broadcasting method are both consisting of 704 pixels in the horizontal direction (I = 1 to 704) × 480 pixels in the vertical direction (J = 1 to 480), which are in compliance with the image configuration of a standard non-interlace scanning method.

The image (Fig. 1B) of the video data in accordance with the stereoscopic broadcasting method includes two blocks B1 and B2. One of the two blocks B1 and B2 represents an image for right eye video signal obtained through the interlace scanning method, and the other represents an image for the left eye video signal obtained through the interlace scanning method (in the following, it is assumed that block B1 is for the right eye and block B2 is for the left eye, for convenience of description). Fig. 1B represents an image of an odd-field or an even-field of the video data in accordance with the stereoscopic broadcasting method.

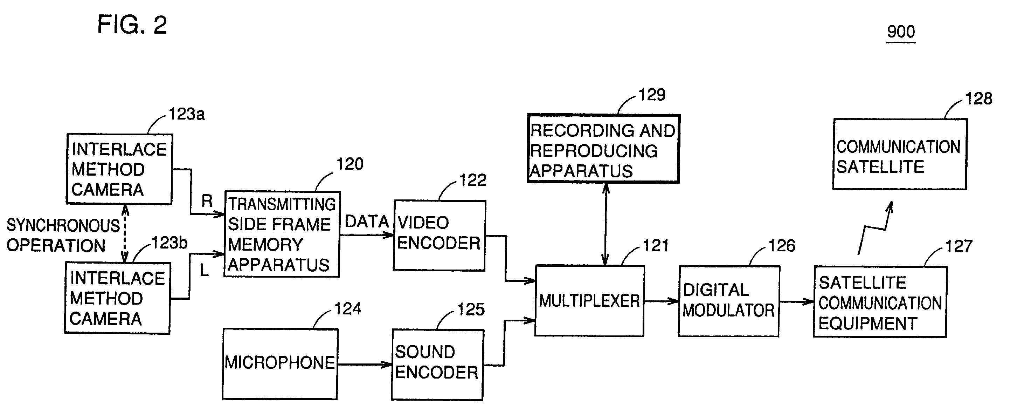

A digital stereoscopic broadcasting system 900 generating and transmitting the video data in accordance with the stereoscopic broadcasting method will be described with reference to Fig. 2.

Fig. 2 is a block diagram schematically showing a basic configuration of the transmitting side of digital stereoscopic broadcasting system 900. Referring to Fig. 2, the transmitting side of digital stereoscopic broadcasting system 900 includes cameras 123a and 123b in accordance with the interlace method receiving as inputs video images, and a transmitting side frame memory apparatus 120.

Transmitting side frame memory apparatus 120 converts two fields of video signals received from cameras 123a and 123b, respectively, to video data (see Fig. 1B) in accordance with one frame stereoscopic broadcasting method.

More specifically, transmitting side frame memory apparatus 120 includes two field memories, not shown, and right eye video signal R received from camera 123a is written to one field memory and the left eye video signal L received from camera 123b is written to the other field memory. The right eye video signal R and the left eye video signal L are read twice the speed of writing from respective field memories. Thus, video data in accordance with the stereoscopic broadcasting method are generated.

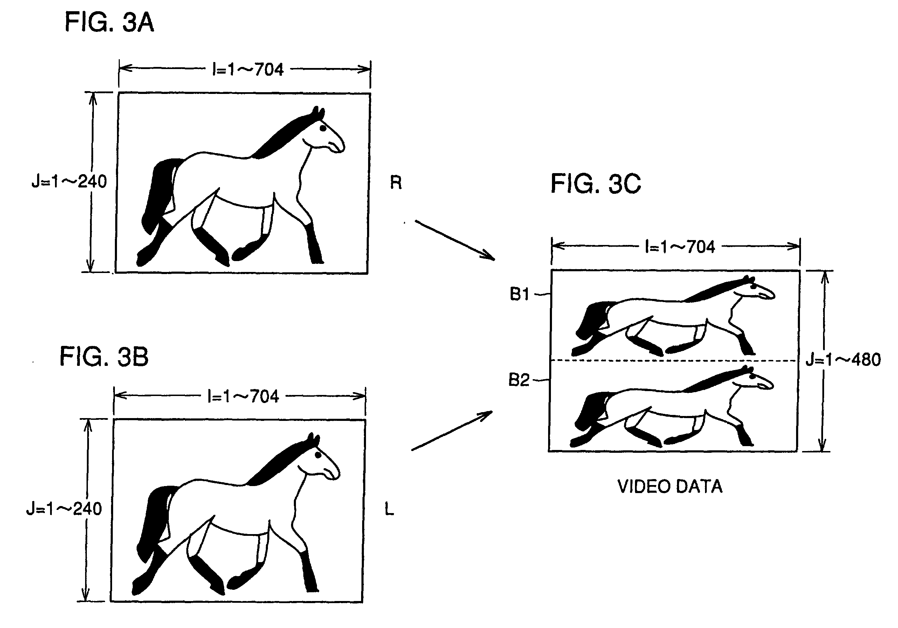

The operation of transmitting side frame memory apparatus 120 of digital stereoscopic broadcasting system 900 shown in Fig. 2 will be briefly described with reference to Figs. 3A to 3C.

Figs. 3A to 3C are illustrations representing the operation of transmitting side frame memory apparatus 120 of digital stereoscopic broadcasting system 900. Figs. 3A and 3B represent examples of image configurations of right eye video signal R and left eye video signal L, respectively, and Fig. 3C represents an image configuration of video data output from transmitting side frame memory apparatus 120.

From Figs. 3A and 3B, it is assumed that effective number of pixels of the images corresponding to the right eye video signal R and left eye video signal L are 704 pixels in the horizontal direction (horizontal direction pixel number I: I = 1 to 704) × 240 pixels in the vertical direction (vertical direction pixel number J: J = 1 to 240), and that horizontal synchronizing frequency FH is 15.75 kHz and vertical synchronizing frequency FR is 59.94 Hz, for the right eye video signal R and left eye video signal L.

In this case, when the write frequency to the field memory is represented as FH and the read frequency is represented as (2 × FH), then video data having such image configuration as shown in Fig. 1B with horizontal synchronizing frequency of 31.5 kHz and vertical synchronizing frequency of 59.95 Hz are generated.

Referring to Fig. 2, the transmitting side of digital stereoscopic broadcasting system 900 further includes a video encoder 122, a microphone 124, a sound encoder 125, a multiplexer 121, a digital modulator 126 and a satellite communication equipment 127.

The video data generated by the transmitting side frame memory apparatus 120 are compressed and modulated in compliance with MPEG 2 standard (Motion Picture Coding Expert Group Phase 2: international standard for compressing full color motion image), and transmitted through communication satellite 128.

When fight eye video signal R and left eye video signal L are arranged in the vertical direction on the image plane, efficiency in compression is improved when a compression method utilizing correlation in time axis direction such as MPEG 2 is used.

Digital stereoscopic broadcasting system 900 may have a recording and reproducing apparatus 129 connected to multiplexer 123, where the video data including compressed two image planes are recorded, whereby the video data is transmitted through the recording medium. Alternatively, the system may be configured to receive data reproduced by recording and reproducing apparatus 129 which data is transmitted by communication satellite 128.

Specific examples of recording and reproducing apparatus 129 includes a hard disk of a personal computer, a DVD, a DVD-RAM, a D-VTR, an MD, a magneto optical disk and the like.

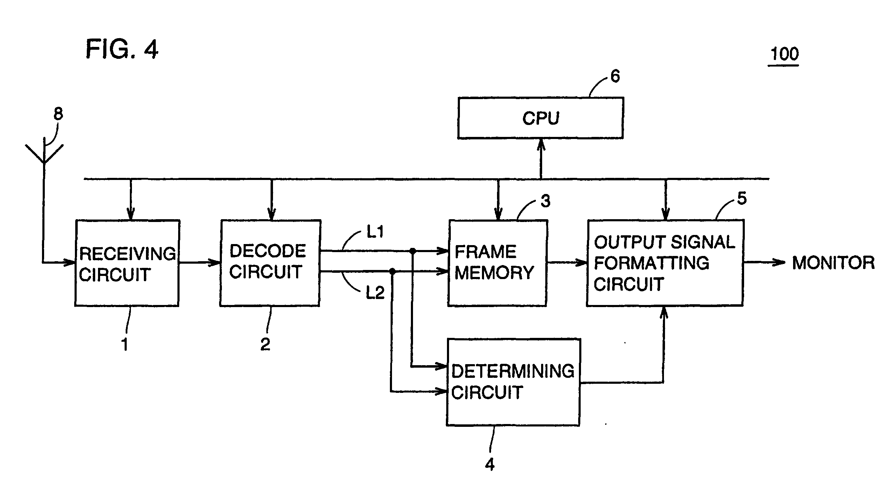

The digital broadcast receiver 100 in accordance with the first embodiment of the present invention will be described with reference to Fig. 4.

Fig. 4 is a schematic block diagram representing a basic configuration of digital broadcast receiver 100 in accordance with the first embodiment of the present invention. As can be seen from Fig. 4, digital broadcast receiver 100 includes a receiving circuit 1, a decode circuit 2, a frame memory 3, a determining circuit 4, an output signal formatting circuit 5 and a CPU 6.

Digital broadcast receiver 100 receives one channel of video data (Fig. 1A or Fig. 1B) by an antenna 8. Receiving circuit 1 includes a tuner and digital demodulating circuit, not shown, and digitally demodulates the received video data.

Decode circuit 2 receives an output of receiving circuit 1, decompresses the received output (for example, decodes in accordance with MPEG 2), and provides pixel data. Frame memory 3 stores frame by frame the pixel data output from decode circuit 2.

Determining circuit 4 receives the pixel data output from decode circuit 2, and determines whether the received video data is in accordance with the stereoscopic broadcasting method (Fig. 1B) or the broadcasting method 1 (Fig. 1A).

Output signal formatting circuit 5 formats the pixel data stored in frame memory 3 in accordance with the result of determination by determining circuit 4, and generates an output signal. The output signal is transmitted to a monitor positioned in the succeeding stage, not shown. CPU 6 controls various component circuits.

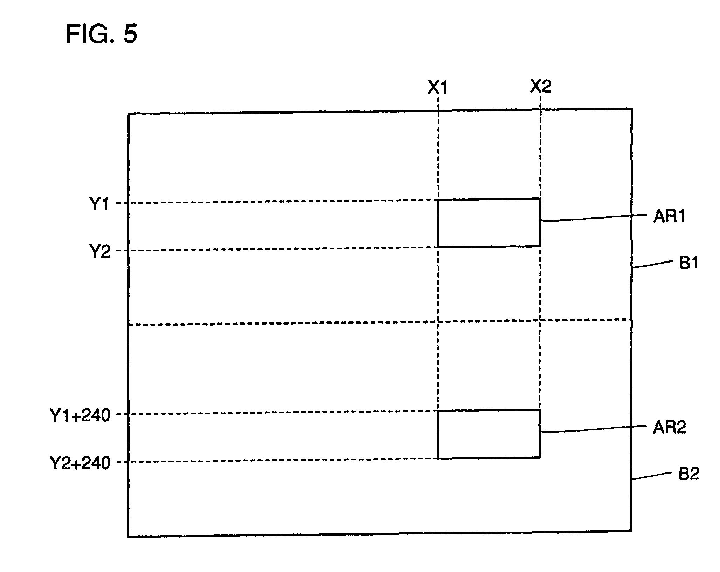

The determining process by the determining circuit 4 in accordance with the first embodiment of the present invention will be described with reference to Fig. 5.

Fig. 5 is an illustration representing an example of an object of determination made by the determining circuit in accordance with first embodiment of the present invention. The determining circuit 4 shown in Fig. 5 uses pixel data of a specific area AR1 and a specific area AR2 of one frame of video data.

The specific areas AR1 and AR2 are determined respectively for the above described blocks B1 and B2 (see Fig. 1B). For example, when blocks B1 and B2 are in such a relation as represented by Fig. 1B, specific area AR1 is determined to be an area having P pixels in the horizontal direction $(P = X2 - X1 + 1) \times Q$ pixels in the vertical direction $(Q = Y2 - Y1 + 1)$ with horizontal pixels being X1 to X2 (=I) and vertical pixels being Y1 to Y2 (= J), and the specific area AR2 is determined to be an area having P pixels in the horizontal direction $(P = X2 - X1 + 1) \times Q$ pixels in the vertical direction $(Q = Y2 - Y1 + 1)$ with horizontal pixels being X1 to X2 (=I) and vertical pixels being Y1 + 240 to Y2 + 240 (=J).

More specifically, that area of block B2 which overlaps specific area AR1 when block B1 is overlapped on block B2 is determined to be specific area AR2.

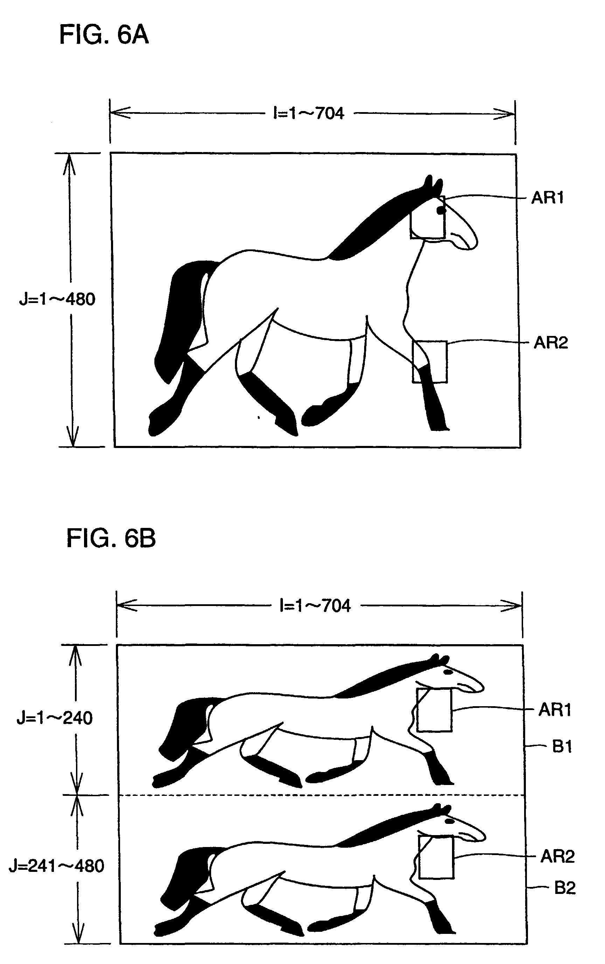

An example of the relation between specific areas AR1 and AR2 will be described with reference to Figs. 6A and 6B.

Figs. 6A and 6B represent an example of the relation between specific areas AR1 and AR2 which are subjected to determination process by determining circuit 4 in accordance with the first embodiment of the present invention. Fig. 6A represents an example in which the video data to be determined is in accordance with broadcasting method 1, and Fig. 6B represents an example in which the video data to be determined is in accordance with the stereoscopic broadcasting method.

Referring to Figs. 6A to 6B, when video data is in accordance with broadcasting method 1 (Fig. 6A), the pixel data of specific area AR1 and pixel data of specific area AR2 generally have low correlation. When the video data is in accordance with the stereoscopic broadcasting method (Fig. 6B), specific area AR1 consists of pixel data based on right eye video signal, while specific area AR2 consists of pixel data based on left eye video signal. Therefore, though pixel data of specific areas AR1 and AR2 are not completely the same because of binocular parallax, the pixel data have high correlation.

Therefore, whether the video data is in accordance with the stereoscopic broadcasting method or not can be determined by examining the relation between pixel data of specific areas AR1 and AR2.

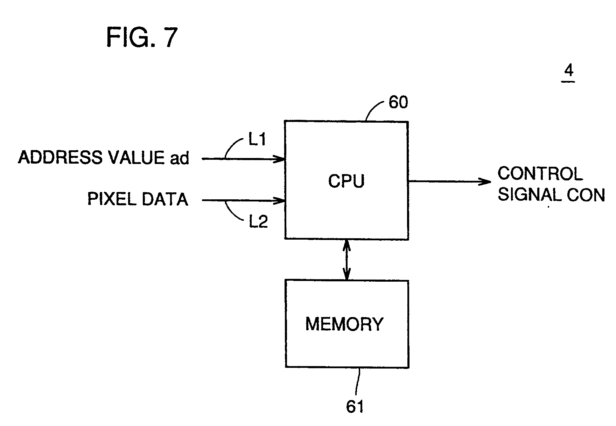

Basic configuration of an example of determining circuit 4 in accordance with the first embodiment of the present invention will be described with reference to Fig. 7.

Fig. 7 is a schematic block diagram representing a specific configuration of an example of determining circuit 4 in accordance with the first embodiment of the present invention. As can be seen from Fig. 7, determining circuit 4 includes a CPU 60 and a memory 61.

CPU 60 receives an address value ad though an address line L1 and pixel data though a data line L2, from decode circuit 2. Pixel data of specific areas AR1 and AR2 are transmitted therefrom to memory 61. Memory 61 receives and stores the pixel data from CPU 60. Further, CPU 60 determines video data using the pixel data stored in memory 61, and outputs a control signal CON as a result of determination. An example of the determining method includes a method of measuring color difference (difference) between pixel data of specific area AR1 and pixel data of specific area AR2.

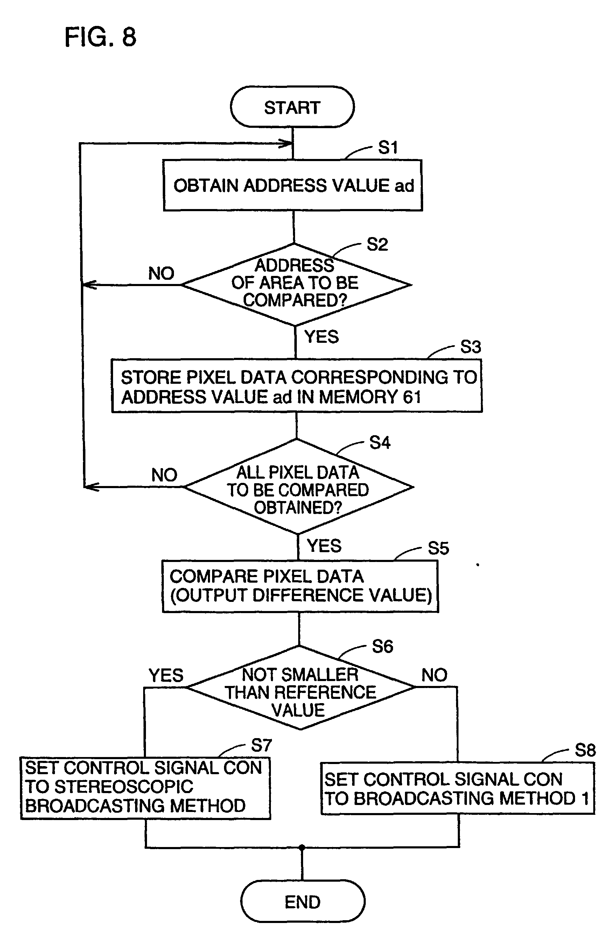

An example of the process procedure in determining circuit 4 in accordance with the first embodiment of the present invention will be described with reference to Fig. 8.

Fig. 8 represents an example of the process procedure in determining circuit 4 in accordance with the first embodiment of the present invention. Referring to Fig. 8, an operation when CPU 60 makes a determination based on difference will be described.

In step S1, CPU 60 receives the address value ad. In step S2, whether the obtained address value ad represents the specific area AR1 or AR2 to be compared is determined.

When the address value ad does not coincide specific area AR1 or AR2, the flow returns to step S1 and the next transmitted address value ad is received.

When the address value ad corresponds to the specific area AR1 or AR2, the flow proceeds to step S3, in which pixel data corresponding to the address value ad are stored in memory 61.

In step S4, whether all pixel data constituting specific areas AR1 and AR2 are stored in memory 61 or not is determined.

If not, the flow returns to step S1. When all pixel data constituting specific areas AR1 and AR2 are stored in memory 61, pixel data of specific area AR1 and pixel data of specific area AR2 are compared (difference is found) in step S5.

In step S6, the result of comparison (difference) obtained in step S5 is received, which result is compared with a prescribed reference value.

If the result of comparison is not smaller than the reference value, it is determined that the received video data is in accordance with the stereoscopic broadcasting method (step S7), and if the result is smaller than the reference value, it is determined that the video data is in accordance with the broadcasting method 1 (step S8), and the result of determination is set in control signal CON and the signal is output.

Output signal formatting circuit 5 shown in Fig. 4 formats the pixel data stored in frame memory 3 shown in Fig. 4 and generates an output signal, in accordance with the control signal CON.

More specifically, the digital broadcast receiver 100 in accordance with the first embodiment of the present invention is capable of determining the broadcasting method (including the stereoscopic broadcasting method) of the video data received, and therefore it is capable of reproducing and displaying video data received by appropriate formatting based on the result of determination.

Though difference is utilized in the method of determination in the present embodiment, other method may be used.

As described above, the digital broadcast receiver in accordance with the first embodiment of the present invention is capable of determining whether the video data is in accordance with the stereoscopic broadcasting method or in accordance with common broadcasting method, by the analysis of received video data.

Further, the digital broadcast receiver in accordance with the first embodiment of the present invention is capable of appropriately displaying the received video data on a monitor connected to a succeeding stage, by utilizing the result of determination of the broadcasting method.

More specifically, the digital broadcast receiver in accordance with the first embodiment of the present invention is compatible with the stereoscopic broadcast and normal broadcast using only one channel of transmission path.

Further, the digital broadcast receiver in accordance with the first embodiment of the present invention is capable of appropriately displaying any video data received on a monitor positioned in the succeeding stage, as whether the video data is in accordance with the stereoscopic broadcasting method or not is determined. Therefore, both the stereoscopic broadcasting service and the common broadcasting service can be provided by a simple facility and a simple circuit configuration.

(Second Embodiment)

The second embodiment of the present invention is to make the digital broadcast receiver be compatible with a plurality of broadcasting methods and especially, with respect to stereoscopic display, the present embodiment enables the receiver to reproduce and display in the stereoscopic display method designated by a user.

The digital broadcast receiver in accordance with the second embodiment of the present invention receives, as an input, video data (Fig. 1A) in accordance with a non-interlace scanning method or video data (Fig. 1B) of one channel in accordance with the stereoscopic broadcasting method. When the video data in accordance with the non-interlace scanning method is received, reproduction and display is given in the non-interlace scanning method (hereinafter referred to as display method 1), and when the video data in accordance with the stereoscopic broadcasting system is received, the reproduction and display is given in a stereoscopic display method 1 (reproduced and displayed in one channel) or a stereoscopic display method 2 (reproduced and displayed in two channels) as selected by the user.

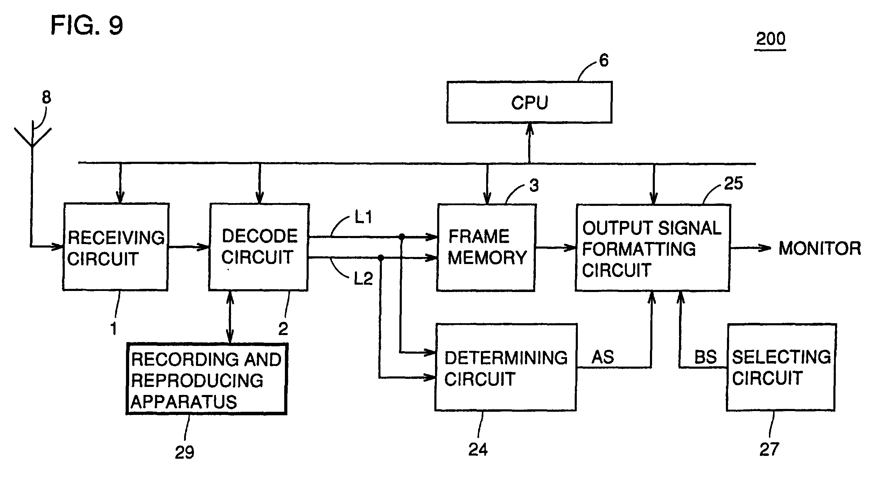

The digital broadcast receiver in accordance with the second embodiment of the present invention will be described with reference to Fig. 9.

Fig. 9 is a schematic block diagram representing a basic configuration of a digital broadcast receiver 200 in accordance with the second embodiment of the present invention. Components corresponding to the digital broadcast receiver 100 shown in Fig. 4 are denoted by the same characters and same reference numerals, and description thereof is not repeated.

Digital broadcast receiver 200 shown in Fig. 9 includes a receiving circuit 1, a decode circuit 2, a frame memory 3, a determining circuit 24, an output signal formatting circuit 25, a selecting circuit 27, a recording and reproducing apparatus 29 and a CPU 6.

Digital broadcast receiver 200 receives, as an input, video data of one channel (see Figs. 1A and 1B) received at antenna 8.

Determining circuit 24 receives pixel data output from decode circuit 2 and determines whether the received video data is in accordance with the stereoscopic broadcasting method. The method of determination may include, as an example, a method of decoding information related to the broadcasting method added in advance to the video data. The configuration may be the same as that of the determining circuit 4 described with reference to the first embodiment of the present invention. Result of determination AS by determining circuit 24 is transmitted to output signal formatting circuit 25.

Selecting circuit 27 is a circuit for selecting one stereoscopic display method among a plurality of stereoscopic display methods in accordance with user's designation. In the second embodiment of the present invention, either stereoscopic display method 1 or stereoscopic display method 2 can be selected.

An example of selecting circuit 27 consists of a switch. In that case, a switching signal BS representing whether the reproduction and display are in accordance with the stereoscopic display method 1 or stereoscopic display method 2 is generated in response to the switching operation by the user.

Output signal formatting circuit 25 formats pixel data stored in frame memory 3, based on the result of determination AS from determining circuit 24 and the switching signal BS from selecting circuit 27. The generated output signal is transmitted to a monitor positioned in a succeeding stage, not shown. CPU controls various component circuits.

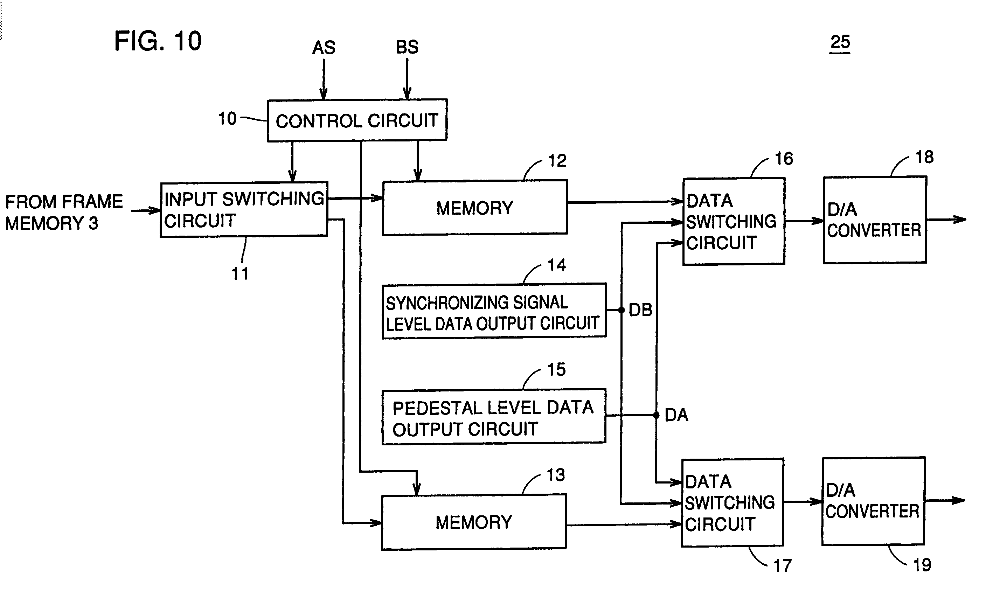

An example of the basic configuration of output signal formatting circuit 25 in accordance with the second embodiment of the present invention will be described with reference to Fig. 10.

Fig. 10 is a block diagram showing an example of the basic configuration of output signal formatting circuit 25 in accordance with the second embodiment of the present invention. The output signal formatting circuit 25 shown in Fig. 10 includes a control circuit 10, an input switching circuit 11 and memories 12 and 13.

Control signal 10 determines the display method to be used for reproduction and display in accordance with the result of determination AS received from determining circuit 24 and the switching signal BS received from selecting circuit 27, and controls the formatting process, which will be described later.

More specifically, when the received video data is determined to be not in accordance with the stereoscopic broadcasting method, control circuit 10 in accordance with the second embodiment of the present invention determines the display method 1 to be used and when the received video data is determined to be in accordance with the stereoscopic broadcasting method, the control circuit 10 determines the stereoscopic display method 1 or stereoscopic display method 2 to be used, as selected by the switching signal BS.

Input switching circuit 11 outputs the pixel data received from frame memory 3 to memory 12 or memory 13 under the control of control circuit 10. More specifically, when the display method determined by control circuit 10 is the display method 1 or the stereoscopic display method 1, pixel data are output to memory 12, and if the display method is the stereoscopic display method 2, pixel data are output to memories 12 and 13.

Memories 12 and 13 store the pixel data output from input switching circuit 11. More specifically, pixel data sequence corresponding to pixels aligned in one line in the horizontal direction (horizontal direction pixel number I = 1 to 704, vertical direction pixel number J = fixed) is written in the order of scanning of non-interlace scanning method. FIFO memories may be used as memories 12 and 13.

The pixel data sequence written in memories 12 and 13 are read at timings corresponding to the display method determined under the control of control circuit 10.

Referring to Fig. 10, output signal formatting circuit 25 further includes a synchronizing signal level data output circuit 14, pedestal level data output circuit 15, data switching circuits 16 and 17, and D/A converters 18 and 19.

Synchronizing signal level data output circuit 14 outputs a synchronizing signal level data DB (including data related to the horizontal and vertical synchronizing signals). Pedestal level data output circuit 15 outputs pedestal level data DA.

Data switching circuit 16 (or 17) switches among and outputs the pixel data sequence read from memory 12 (or 13), synchronizing side level data DB and pedestal level data DA, at a prescribed timing, under the control of control circuit 10.

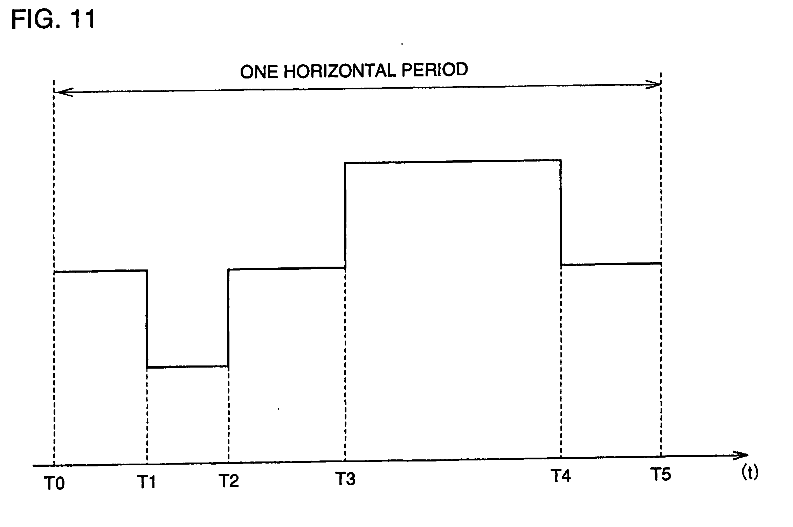

The formatting process in accordance with the second embodiment of the present invention will be described with reference to the time chart of Fig. 11.

Fig. 11 is a timing chart representing the formatting process in accordance with the second embodiment of the present invention. Referring to Fig. 11, time T1 represents the position of the synchronizing signal, times T0, T2 and T4 represent positions of pedestal signals and times T0 to T5 represent one horizontal period, respectively.

For example, data switching circuit 16 shown in Fig. 10 outputs pedestal level data DA when pedestal signal position T0 is attained, until time T1. At synchronizing signal position T1, the output is switched from pedestal level data DA to synchronizing signal level data DB. From pedestal signal position T2, the output is switched from synchronizing signal level data DB to pedestal level data DA. In the period from T0 to T3, reading of pixel data sequence from memories 12 and 13 is not performed.

In the period from T3 to T4, the pixel data sequence is read from memory 12, and the read pixel data sequence is output. In the period from pedestal position T4 to time T5, the output is switched to pedestal level data DA. In the period from T4 to T5, reading of pixel data sequence from memories 12 and 13 is not performed.

The synchronizing signal position and pedestal signal position are set in advance for each broadcasting or displaying method, and controlled by control circuit 10.

Referring to Fig. 10, D/A converter 18 converts digital data output from data switching circuit 16 to analog data and generates a video signal. Similarly, D/A converter 19 converts digital data output from data switching circuit 17 to analog data and generates a video signal.

More specifically, the video signal output from D/A converter 18 is the video signal in accordance with the display method 1, the video signal in accordance with the stereoscopic display method 1 or the left eye video signal in accordance with the stereoscopic display method 2, and the video signal output from D/A converter 19 is the left eye video signal in accordance with the stereoscopic display method 2.

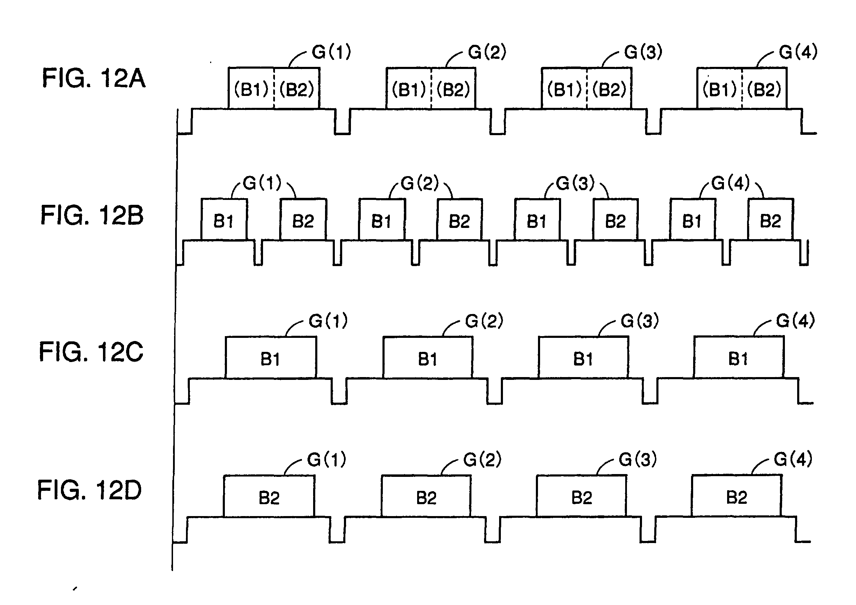

Formats of video signals corresponding to respective display methods output from output signal formatting circuit 25 will be described with reference to Figs. 12A to 12D.

Figs. 12A to 12D are illustrations representing formats of video signals corresponding to respective display methods output from output signal formatting circuit 25 in accordance with the second embodiment of the present invention. Fig. 12A represents the relation between an image plane in accordance with display method 1 and vertical synchronizing signal, Fig. 12B represents the relation between an image plane in accordance with the stereoscopic display method 1 and the vertical synchronizing signal, and Figs. 12C and 12D represent the relation between an image plane in accordance with the stereoscopic display method 2 and the vertical synchronizing signal.

In the figures, the reference character G (i) (where i = 1, 2, ...) represents an image plane number of the video data, and reference characters B1 and B2 correspond to the blocks B1 and B2 described with reference to Fig. 1B. When the received video data is in accordance with the stereoscopic broadcasting method (see Fig. 1B), the reference character G (i) given in Figs. 12B to 12D corresponds to an odd-field or an even-field image plane (for simplicity of description, it is assumed that in the reference character G (i), when $i = 2 \times k$, the image plane is an even-field image plane, and when $i = 2 \times k + 1$, the image plane is an odd-numbered field image plane).

Referring to Figs. 12A to 12D, when stereoscopic display is not given (Fig. 12A), memory 12 and data switching circuit 16 shown in Fig. 10 operate, and video signals of one channel are output from D/A converter 18.

When the user selects the stereoscopic display method 1 in which the stereoscopic display is given by video images of one channel (Fig. 12B), memory 12 and data switching circuit 16 shown in Fig. 10 operate, and for every image plane G (i), information such as synchronizing signal is added to the image plane for the right eye video signal (block B1) and the image plane of the left eye video signal (block B2). As a result, corresponding video signals of one channel are output in the order of an odd-numbered field for the right eye, an odd-numbered field for the left eye, an even-numbered field for the fight eye, an even-numbered field for the left eye, ..., from D/A converter 18.

When the user selects the stereoscopic display method 2 in which stereoscopic display is given by video images of two channels (Figs. 12C and 12D), image plane (block B1) of the right eye video signal and image plane (block B2) for the left eye video signal are stored separately in memories 12 and 13, respectively, for each image plane. Using data switching circuits 16 and 17, the information such as the synchronizing signal is added to the stored pixel data. As a result, corresponding right eye video signals of one channel are output in the order of an odd-numbered field for the right eye, an even-numbered field for the right eye, ... (Fig. 12C) from D/A converter 18, and corresponding video signals of one channel are output in the order of an odd-numbered field for the left eye, an even-numbered field for the left eye, ... (Fig. 12D) from D/A converter 19.

More specifically, digital broadcast receiver 200 is capable of receiving video data in accordance with the non-interlace scanning method or video data in accordance with the stereoscopic broadcasting method, and when video data in accordance with the stereoscopic broadcasting method is received, the data can be reproduced and displayed in the stereoscopic display method selected by the user.

Therefore, by the use of digital broadcast receiver 200, various stereoscopic displays can be provided, including stereoscopic display in accordance with CRT method utilizing binocular opened-dosed by liquid crystal shutters, and stereoscopic display utilizing two projectors.

The digital broadcast receiver 200 may be configured such that compressed video data from recording and reproducing apparatus 29 connected to decode circuit 2 is input to decode circuit 2, not limited to the input from antenna 8, or such that the data decoded by decode circuit 2 is recorded in recording and reproducing apparatus 29, as shown in Fig. 9.

Specific examples of recording and reproducing apparatus 29 include a hard disk of a personal computer, a DVD, a DVD-RAM, a D-VTR, an MD, a magneto optical disk and the like.

The video data in accordance with the stereoscopic broadcasting method described with reference to the second embodiment of the present invention is not limited to the configuration and contents described above.

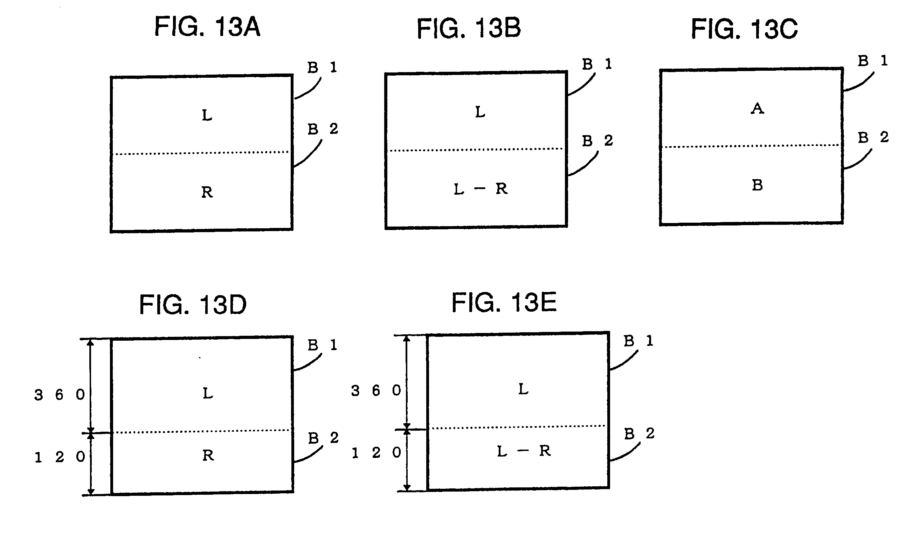

Other examples of video data configuration in accordance with the stereoscopic broadcasting method which can be received by digital broadcast receiver 200 in accordance with the second embodiment of the present invention will be described with reference to Figs. 13A to 13E.

Figs. 13A to 13E are illustrations representing other examples of video data configuration in accordance with the stereoscopic broadcasting methods received by the digital broadcast receiver 200 in accordance with the second embodiment of the present invention. In the foregoing description, block B1 constituting an image plane of video data corresponding to a stereoscopic broadcasting method is described as an image plane corresponding to the right eye video signal R and block B2 is described as an image plane corresponding to the left eye video signal L. Alternatively, as can be seen from Fig. 13A, block B1 may be an image plane corresponding to the left eye video signal L and block B2 may be an image plane corresponding to the right eye video signal R.

The image planes of video data in accordance with the stereoscopic broadcasting method are not limited to those consisting of an image plane corresponding to the right eye video signal R and an image plane corresponding to the left eye video signal L. For example, referring to Fig. 13B, the image planes may be configured by an image plane corresponding to the left eye video signal L and an image plane corresponding to the difference (L - R) between the left eye video signal L and the right eye video signal R.

Further, any video information not limited to the stereoscopic broadcasting method may be used, provided that the video information of two image planes are is included. For example, referring to Fig. 13C, the image planes may be configured by image planes corresponding to mutually different video signals A and B.

Further, blocks B1 and B2 may not be the same size. For example, referring to Fig. 13D, block B1 may have 360 pixels in the vertical direction, and block B2 may have 120 pixels in the vertical direction. Further, referring to Fig. 13E, block B1 having 360 pixels in the vertical direction may be an image plane corresponding to the left eye video signal L, and block B2 having 120 pixels in the vertical direction may be an image plane corresponding to the difference (L - R) of the video signals. It should be noted that in accordance with MPEG standard, compression and decompression are performed block by block of 8 pixels × 8 pixels, and therefore the number of pixels in the vertical direction of blocks B1 and B2 must be a multiple of 8.

Further, the ratio of pixel numbers in the vertical direction between blocks B1 and B2 may be fixed or variable. For example, when the left eye video signal L and the difference (L - R) of video signals are to be transmitted, the ratio is made variable in accordance with the amount of information of the difference (L - R), dependent on the contents of video signals R and L. When mutually different video signals A and B are to be transmitted, the ratio is made variable, dependent on the ratio of respective amounts of information.

As described above, the digital broadcast receiver in accordance with the second embodiment of the present invention is capable of reproduction and display corresponding to a plurality of display methods, based on the result of determination of the broadcasting method and designation by the user.

Further, by the digital broadcast receiver in accordance with the second embodiment of the present invention, it is possible to generate video signals corresponding to the stereoscopic display method designated by the user for stereoscopic display, and therefore it can cope with various types of stereoscopic broadcasting.

Further, by the digital broadcast receiver in accordance with the second embodiment of the present invention, both stereoscopic broadcast and common broadcast can be possible using one channel of transmission path.

Further, by the digital broadcast receiver in accordance with the second embodiment of the present invention, it is possible to generate video signals corresponding to a plurality of broadcasting methods including the stereoscopic broadcasting method. Therefore, the stereoscopic broadcasting service and the common broadcasting service can be provided by a simple facility and a simple circuit configuration.

(Third Embodiment)

The third embodiment of the present invention enables a display apparatus to reproduce and display in accordance with a plurality of broadcasting methods including stereoscopic broadcasting method, and allows the user to visually recognize the broadcasting method of the reproduced and displayed video images.

The display apparatus in accordance with the third embodiment of the present invention receives video data in accordance with interlace scanning method (hereinafter referred to as broadcasting method 1), video data in accordance with non-interlace scanning method (hereinafter referred to as broadcasting method 2) and video data in accordance with the stereoscopic broadcasting method.

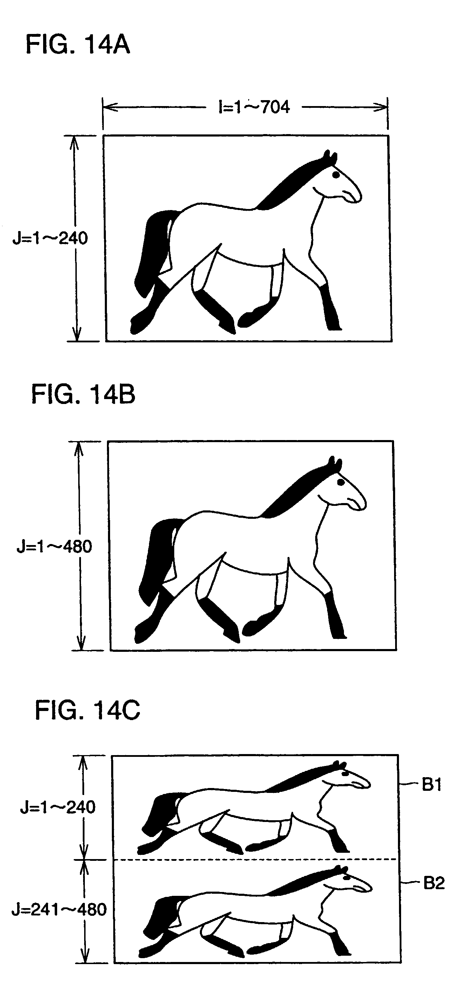

Image configurations of the video data received by the display apparatus in accordance with the third embodiment of the present invention will be described with reference to Figs. 14A to 14C.

Figs. 14A to 14C represent image configurations of video data received by the display apparatus in accordance with the third embodiment of the present invention. Fig. 14A represents an image plane of the video data in accordance with the broadcasting method 1, Fig. 14B represents an image plane of the video data in accordance with the broadcasting method 2, and Fig. 14C represents an image plane of video data in accordance with the stereoscopic broadcasting method.

Referring to Figs. 14A to 14C, the image plane (Fig. 14A) of the video data in accordance with broadcasting method 1 has 704 pixels in the horizontal direction (I = 1 to 704) × 240 pixels in the vertical direction (J = 1 to 240).

The image plane (Fig. 14B) of the video data in accordance with the broadcasting method 2 and the image plane (Fig. 14C) of the video data in accordance with the stereoscopic broadcasting method both have 704 pixels in the horizontal direction (I = 1 to 704) × 480 pixels in the vertical direction (J = 1 to 480), which correspond to the image plane provided by the standard non-interlace scanning method.

Further, the image plane (Fig. 14C) of the video data in accordance with the stereoscopic broadcasting method consists of two blocks B1 and B2 as described above, one of which is the image plane of the right eye video signal obtained by the interlace scanning method and the other corresponds to an image plane of the left eye video signal obtained by the interlace scanning method. Here, it is assumed that the block B1 is for the right eye and block B2 is for the left eye.

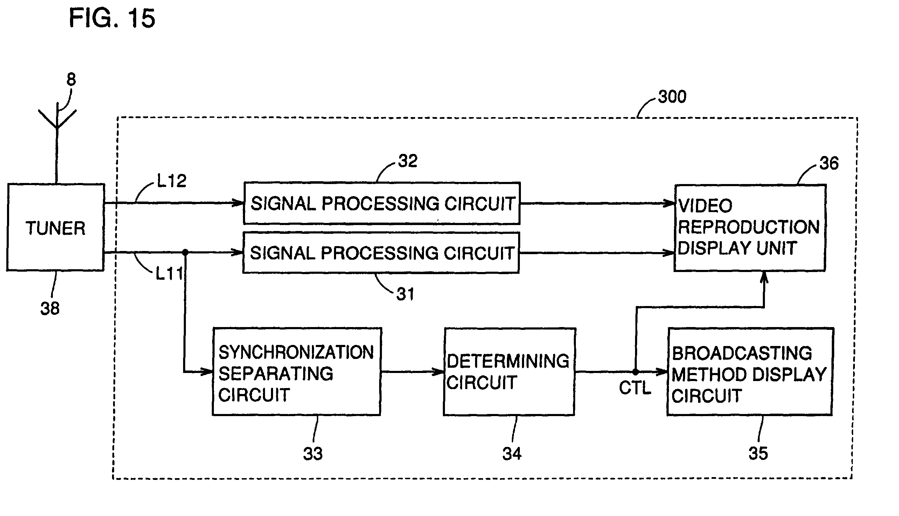

The display apparatus 300 in accordance with the third embodiment of the present invention will be described with reference to Fig. 15.

Fig. 15 is a schematic block diagram representing a basic configuration of the receiving side, focusing on display apparatus 300, in accordance with the third embodiment of the present invention. Display apparatus 300 shown in Fig. 15 includes signal lines L11 and L12, signal processing circuits 31 and 32, a synchronization separating circuit 33, a determining circuit 34, a broadcasting method display circuit 35 and a video reproduction and display unit 36.

Display apparatus 300 receives external video data through antenna 8 and tuner 38. Antenna 8 receives video data in accordance with any of broadcasting method 1, broadcasting method 2 and stereoscopic broadcasting method. Antenna 8 and tuner 38 may be integrated with display apparatus 300.

Here, it is assumed that the frequency of the vertical synchronizing signal in the video data in accordance with the broadcasting method 2 and the video data in accordance with the stereoscopic broadcasting method 2 and the video data in accordance with the stereoscopic broadcasting method is 60 Hz.

Tuner 38 converts the video data received by antenna 8 to the video signals described in the following. More specifically, the tuner converts the video data in accordance with the stereoscopic broadcasting method or broadcasting method 2 to (Y, Pb, Pr) signal. Further, the video data in accordance with the stereoscopic broadcasting method (see Fig. 14C) are divided into right eye video image (corresponding to block B1) and left eye video image (corresponding to block B2). The video data in accordance with broadcasting method 1 are converted to composite signals. These video signals are input to display apparatus 300 through signal lines L11 and L12.

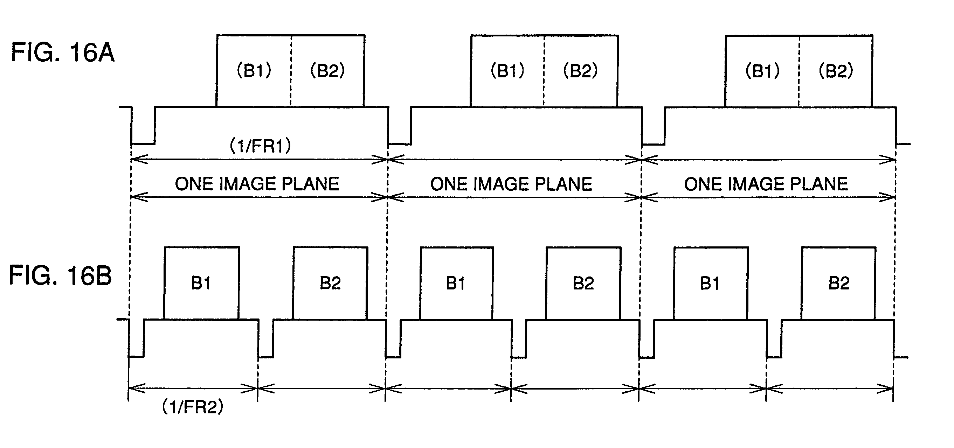

The relation between the image plane of the video signals input through signal line L11 and the vertical synchronizing signal in accordance with the third embodiment of the present invention will be described with reference to Figs. 16A and 16B.

Figs. 16A and 16B schematically represent the relation between image planes of the video signals input through signal Line L11 and the vertical synchronizing signal, in accordance with the third embodiment of the present invention. Fig. 16A corresponds to the broadcasting method 2, and Fig. 16B corresponds to the stereoscopic broadcasting method.

Reference characters B1 and B2 of Fig. 16B correspond to block B1 (for the right eye) and block B2 (for the left eye) of Fig. 14C, respectively. Referring to Figs. 16A and 16B, the frequency FR1 of the vertical synchronizing signal of the video signals in accordance with the broadcasting method 2 is 60 Hz, while the frequency FR2 of the vertical synchronizing signal in the video signals in accordance with the stereoscopic broadcasting method is twice higher, that is, 120 Hz. Referring to Fig. 15, display apparatus 300 receives video signals in accordance with the stereoscopic broadcasting method or in accordance with the broadcasting method 2 shown in Figs. 16A and 16B through signal line L11, and receives video signals in accordance with the broadcasting method 1 through signal line L12.

Synchronization separating circuit 33 receives Y signal component of (Y, Pb, Pr) signal received by signal line L11, and separates the vertical synchronizing signal.

Determining circuit 34 receives the vertical synchronizing signal output from synchronization separating circuit 33, and determines the broadcasting method of the video signals to be reproduced and displayed by a monitor, which will be described later, (for example, the video signal is in accordance with the stereoscopic broadcasting method), based on the vertical synchronizing signal.

The broadcasting method display circuit 35 displays the broadcasting method based on the result of determination by the determining circuit 34.

Signal processing circuit 31 converts the video signals received through signal line L12 to (R, G, B) signals.

Video reproduction and display unit 36 selectively switches the (R, G, B) signals output from signal processing circuits 31 and 32 based on the result of determination by determining circuit 34, and reproduces and displays the video image on the monitor.

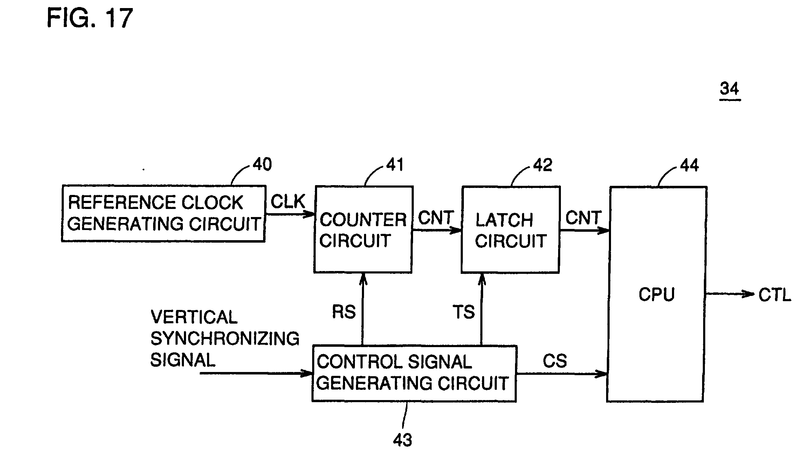

An example of the basic configuration of determining circuit 34 in accordance with the third embodiment of the present invention will be described with reference to Fig. 17.

Fig. 17 is a block diagram showing an example of the basic configuration of determining circuit 34 in accordance with the third embodiment of the present invention. The determining circuit 34 shown in Fig. 17 includes a reference clock generating circuit 40, a counter circuit 41, a latch circuit 42, a control signal generating circuit 43 and a CPU 44.

In response to reception of the vertical synchronizing signal from synchronization separating circuit 33, control signal generating circuit 43 generates reset signal RS, latch signal TS and CPU taking signal CS and outputs these signals to counter circuit 41, latch circuit 42 and CPU 44, respectively.

Reference clock generating circuit 40 generates a reference dock CLK.

Counter 41 counts the reference clock CLK. Counter circuit 41 initializes the count value CNT every time a reset signal RS is received.

Latch circuit 42 latches count value CNT from counter circuit 41 every time the latch signal TS is received, and outputs the latched value. More specifically, it receives from the counter circuit 41 the number of reference clocks CLK generated in the period from one vertical synchronizing signal to another vertical synchronizing signal.

CPU 44 receives the count value CNT in latch circuit 42 every time the CPU taking signal CS is received, compares the count value with a prescribed reference value TH and makes a determination. The result of determination is output as a control signal CTL.

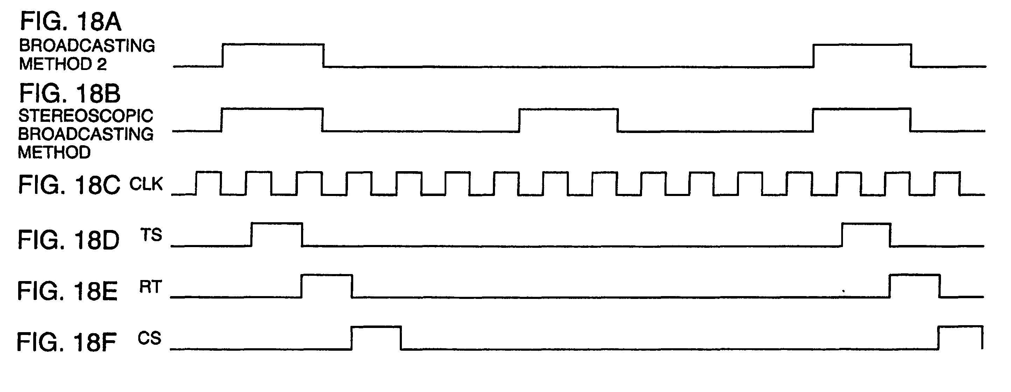

The process in determining circuit 34 in accordance with the third embodiment of the present invention will be described with reference to the timing charts of Figs. 18A to 18F.

Figs. 18A to 18F are timing charts representing the process in determining circuit 34 in accordance with the third embodiment of the present invention. Fig. 18A represents the vertical synchronizing signal in accordance with the broadcasting method 2, and Fig. 18B represents the vertical synchronizing signal in accordance with the stereoscopic broadcasting method.

As already described (see Figs. 16A to 16B), the frequency FR1 of the vertical synchronizing signal in accordance with the broadcasting method 2 is 60 Hz, and the frequency FR2 of the vertical synchronizing signal in accordance with the stereoscopic broadcasting is twice higher, that is, 120 Hz.

Therefore, in the same period, when the number of rises (or falls) of the vertical synchronizing signal in accordance with the stereoscopic broadcasting is represented as N1, N1 is twice the number N2 of rises of the vertical synchronizing in accordance with the broadcasting method 2 ( $N1 = 2 \times N2$ ).

The reference value TH used for the determining process by CPU 44 is calculated based on the relation among reference dock CLK and frequencies FR1 and FR2 of the vertical synchronizing signals.

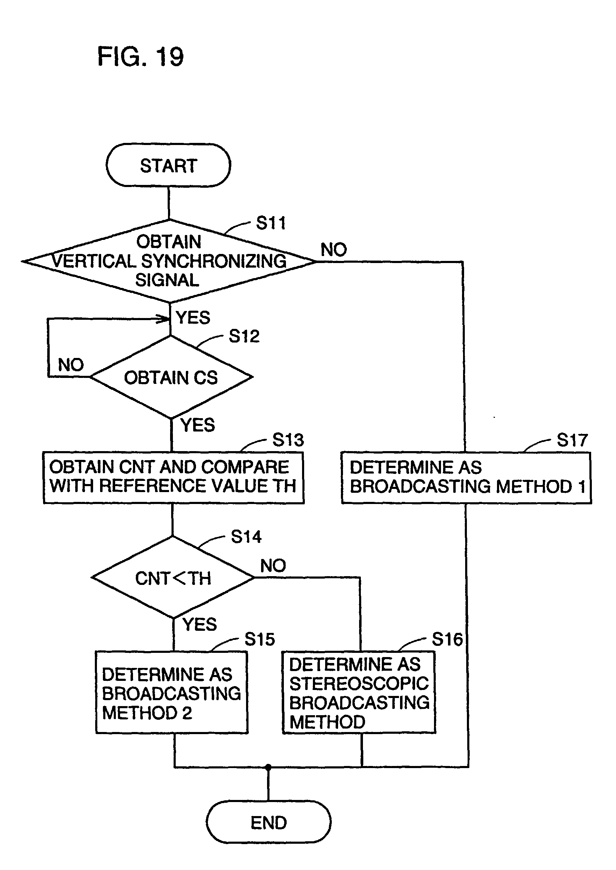

In view of the foregoing, the determining process procedure in determining circuit 34 in accordance with the third embodiment of the present invention will be described with reference to the flow of Fig. 19.

Fig. 19 is a flow representing the determining process procedure of determining circuit 34 in accordance with the third embodiment of the present invention.

Control signal generating circuit 43 is in a standby state until the vertical synchronizing signal is received from synchronization separating circuit 33 (step S11).

With the vertical synchronizing signal not yet received, it is determined that reproduction and display should be given in accordance with the broadcasting method 1 (initialization) (step S17).

When the vertical synchronizing signal is received, the reset signal RS, latch signal TS and CPU taking signal CS described above are generated at the timings shown in Figs. 18A to 18F.

CPU 44 is in the standby state until CPU taking signal CS is received from control signal generating circuit 43 (step S12).

When the CPU taking signal CS is received (step S13), CPU 44 obtains the count value CNT from latch circuit 42 and compares the count value with reference value TH (step S14).

Based on the result of comparison with reference value TH, CPU 44 determines that reproduction and display should be given in accordance with broadcasting method 2 (step S15) or reproduction and display should be given in accordance with the stereoscopic broadcast (step S16). The result of determination is set in control signal CTL and output.

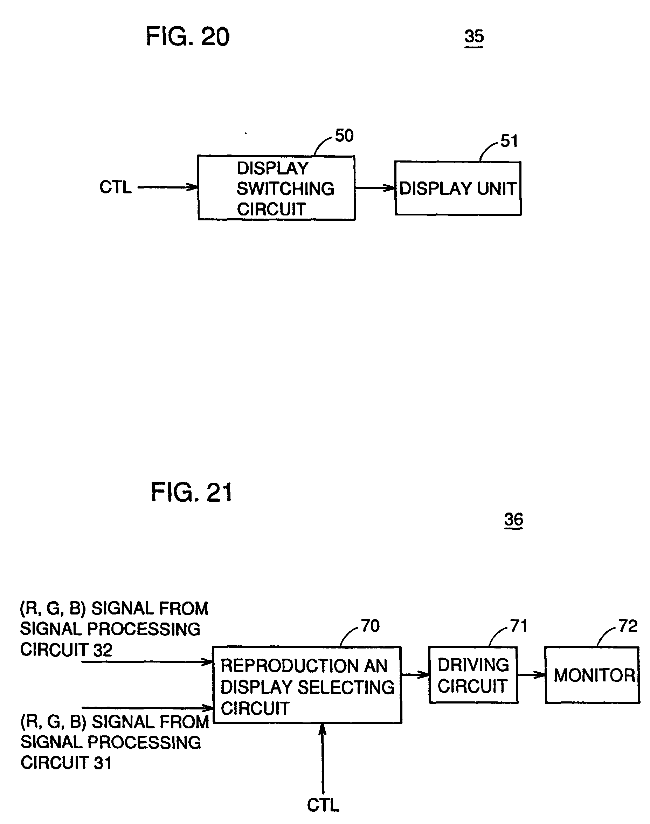

The broadcasting method display circuit 35 in accordance with the third embodiment of the present invention will be described with reference to Fig. 20.

Fig. 20 is a block diagram representing an example of the basic configuration of broadcasting method display circuit 35 in accordance with the third embodiment of the present invention. Broadcasting method display circuit 35 shown in Fig. 20 includes a display switching circuit 50 and a display unit 51.

Display switching circuit 50 controls display unit 51 to change the contents of display, receiving the control signal CTL output from determining circuit 34.

Receiving the instruction from display switching circuit 50, display unit 51 switches the display content from broadcasting method 1 (initial state) to broadcasting method 2 or the stereoscopic broadcasting method, and displays the content. One example of the display unit 51 is an LED.

When the display unit 51 is in accordance with the stereoscopic broadcasting method, for example, the user can immediately know that the video signal displayed on the monitor corresponds to stereoscopic display. Therefore, the user can wear binoculars for stereoscopic display, when the reproduction and display of the stereoscopic video image starts.

The video image reproduction display unit 36 in accordance with the third embodiment of the present invention will be described with reference to Fig. 21.

Fig. 21 is a block diagram showing an example of the basic configuration of video reproduction and display unit 36 in accordance with the third embodiment of the present invention. The video reproduction and display unit 36 shown in Fig. 21 includes a reproduction display selecting circuit 70, a driving circuit 71 and a monitor 72, as can be seen from Fig. 21.

Reproduction and display selecting circuit 70 performs switching control for transmitting (R, G, B) signals received either from signal processing circuit 31 or signal processing circuit 32, in response to control signal CTL output from determining circuit 34, to driving circuit 71 connected to the succeeding stage.

Driving circuit 71 controls such that (R, G, B) signals output from reproduction and display selecting circuit 70 are displayed on monitor 72 connected to a succeeding stage.

Monitor 72 reproduces and displays the video signals received through signal line L11 or L12, receiving the instruction from driving circuit 71. Examples of monitor 72 include a CRT (cathode ray tube), a liquid crystal display and so on.

As described above, by the display apparatus in accordance with the third embodiment of the present invention, the method of broadcasting the video signal can be determined, based on the synchronizing signal of the video signals.

Further, by the display apparatus in accordance with the third embodiment of the present invention, the determined result is displayed, and therefore it is possible for the user to visually recognize the broadcasting method (especially, the stereoscopic broadcasting method) of the video images to be reproduced and displayed.

Further, by utilizing the results obtained by determination of the broadcasting method, appropriate display on the monitor connected in the succeeding stage can be attained.

## Claims

1. A digital broadcast receiver, comprising:

   receiving means (1,2) for demodulating and decompressing received video data and outputting pixel data; and
   determining means (4, 24, 34) for detecting characteristic of the video data received by said receiving means, and determining whether said video data is video data in accordance with a stereoscopic broadcasting method, in response to the result of detection.

2. The digital broadcast receiver, comprising:

   receiving means (1,2) for demodulating and decompressing received video data and outputting pixel data; and
   determining means (4) for determining, based on said pixel data output from said receiving means (1,2), whether said video data is video data in accordance with a stereoscopic broadcasting method.

3. The digital broadcast receiver according to claim 2, wherein said video data is first said video data in accordance with the stereoscopic broadcasting method or second said video data in accordance with a broadcasting method different from said first video data; and

   said determining means (4) determines whether said received video data is the first said video data or the second said video data.

4. The digital broadcast receiver according to claim 3, wherein

   said video data includes said pixel data arranged in a matrix in horizontal and vertical directions; and
   the first said video data constitute said arrangement by a first block (B1, B2) including said pixel data for the right eye and, a second block (B1, B2) including said pixel data for the left eye.

5. The digital broadcast receiver according to claim 4, wherein

said determining means (4) includes

storing means (61) for receiving from said receiving means (1,2) and storing, said pixel data of a specific area of said first block and said pixel data of a specific area of said second block corresponding to said specific area of said first block, and

processing means (60) for comparing said pixel data of said specific area of said first block stored in said storing means (61) with said pixel data of said specific area of said second block stored in said storing means (61) for determining and outputting whether received said video data is the first said video data or the second said video data.

6. The digital broadcast receiver according to claim 2, wherein said video data is reproduced and displayed in accordance with non-interlace scanning method.

7. A display apparatus compatible with a plurality of broadcasting methods, comprising:

separating means (33) for separating and outputting a synchronizing signal from a received video signal;

determining means (34) for determining, based on said synchronizing signal output from said separating means (33), whether said video signal is said video signal in accordance with a stereoscopic broadcasting method; and

display means (51) for displaying to the user, based on the result of determination by said determining means (34), whether said broadcasting method of said received video signal is said stereoscopic broadcasting method.

8. A display apparatus receiving at an input a first video signal or a second video signal, and reproducing and displaying on a monitor in accordance with a broadcasting method, comprising:

separating means (33) responsive to reception of said first video signal, for separating and outputting a synchronizing signal from said input first video signal;

determining means (34) responsive to said synchronizing signal from said separating means (33), for determining based on said synchronizing signal, whether the signal to be reproduced and displayed on said monitor is said first video signal in accordance with a first broadcasting method or said first video signal in accordance with a second broadcasting method different from said first broadcasting method, and responsive to non-reception of said synchronizing signal from said separating means, for determining that the signal to be reproduced and displayed on said monitor is said second video signal in accordance with a broadcasting method different from said first and second broadcasting methods;

display means (51) for displaying to the user, based on the result of determination by said determining means (34), said broadcasting method of said first video signal or said second video signal to be reproduced and displayed on said monitor; and

reproducing and display means (36) based on said broadcasting method determined by said determining means for reproducing and displaying said first video signal or said second video signal on said monitor.

9. The display apparatus according to claim 8, wherein

said first video signal in accordance with said first broadcasting method includes a right eye video signal obtained by interlace scanning method and a left eye video signal obtained by interlace scanning method;

said first video signal in accordance with said second broadcasting method is a video signal obtained by non-interlace scanning method; and

said first broadcasting method is a stereoscopic broadcasting method.

10. The display apparatus according to claim 8, wherein

said synchronizing signal is a vertical synchronizing signal; and

said vertical synchronizing signal in said first video signal in accordance with said first broadcasting method and said vertical synchronizing signal in said first video signal in accordance with said second broadcasting method have mutually different frequencies.

11. The display apparatus according to claim 9, wherein

said determining means (34) includes

reference clock generating means (40) for generating clocks,

count means (41) for counting said generated clocks,

latch means (42) for latching count value counted by said count means (41),

processing means (44) obtaining said count value from said latch means (42) for determining, based on said count value, whether the video signal is in accordance with said first broadcasting method or said second broadcasting method, and

control signal generating means (43) responsive to reception of said synchronizing signal from said separating means (33) for generating a control signal to cause said latch means (42) latch said count value counted by said count means (41), cause said count by said count means (41) to reset said count and cause said processing means (44) to take said count value latched by said latch means (42); and

said processing means (44) compares the count value obtained from said latch means (42) with a prescribed reference value, for determining, based on the result of said comparison, whether said synchronizing signal is in accordance with said first broadcasting method or said second broadcasting method, and when said count value is not received, determines that said synchronizing signal is in accordance with said broadcasting method different from first and second broadcasting methods.

12. The display apparatus according to claim 10, wherein

said determining means (34) includes reference clock generating means (40) for generating clocks,

count means (41) for counting said generated clocks,

latch means (42) for latching count value counted by said count means (41),

processing means (44) obtaining said count value from said latch means (42) for determining, based on said count value, whether the video signal is in accordance with said first broadcasting method or said second broadcasting method, and

control signal generating means (43) responsive to reception of said synchronizing signal from said separating means (33), for generating a control signal to cause said latch means (42) latch said count value counted by said count means (41), cause said count means (41) to reset said count and cause said processing means (44) to take said count value latched by said latch means (42); and

said processing means (44) compares the count value obtained from said latch means (42) with a prescribed reference value for determining, based on the result of said comparison, whether said synchronizing signal is in accordance with said first broadcasting method or said second broadcasting method, and when said count value is not received, determines that said synchronizing signal is in accordance with said broadcasting method different from said first and second broadcasting methods.

13. The display apparatus according to claim 11, wherein

said reference value is determined from frequency of said vertical synchronizing signal in said first video signal in accordance with said first broadcasting method, frequency of said vertical synchronizing signal in said first video signal in accordance with said second broadcasting method and repetition frequency of said clocks.

14. The display apparatus according to claim 12, wherein

said reference value is determined from frequency of said vertical synchronizing signal in said first video signal in accordance with said first broadcasting method, frequency of said vertical synchronizing signal in said first video signal in accordance with said second broadcasting method and repetition frequency of said clocks.

15. A digital broadcast receiver compatible with a plurality of stereoscopic display methods, comprising:

receiving means (1,2) for demodulating and decompressing received video data: and formatting means (25, 27) for formatting a signal output from said receiving means (1,2) based on one stereoscopic display method selected by a user.

16. A digital broadcasting receiver compatible with a plurality of display methods including a plurality of stereoscopic display methods, comprising:

receiving means (1,2) for demodulating and decompressing received video data; and formatting means (25, 27) formatting a signal output from said receiving means; wherein said formatting means (25, 27) performs said formatting in accordance with a stereoscopic display method selected by a user when said received video data is video data in accordance with a stereoscopic broadcasting method, and performs said formatting in accordance with a display method in accordance with the broadcasting method of said received video data regardless of said users selection, when said received video data is different from the video data in accordance with the stereoscopic broadcasting method.

**17.** A digital broadcast receiver compatible with a plurality of display methods including a plurality of stereoscopic display methods, comprising:

receiving means (1,2) for demodulating and decompressing received video data;

determining means (24) for determining whether said received video data is video data in accordance with a stereoscopic broadcasting method or video data different from the stereoscopic broadcasting method;

selecting means (27) operated by a user for selecting one stereoscopic display method among said plurality of stereoscopic display methods;

formatting means (25) for formatting a signal output from said receiving means; and

control means (10) for determining, based on the result of determination by said determining means (24) and selection by said selecting means (27), display method for reproducing and displaying said received video data, and controlling formatting by said formatting means (25).

**18.** The digital broadcast receiver according to claim 17, wherein said video data in accordance with said stereoscopic broadcasting method has one image plane including an image plane for a right eye video image obtained by interlace scanning and an image plane for a left eye video image obtained by interlace scanning method; and

said stereoscopic display method is a first stereoscopic display method providing stereoscopic display by video images of one channel, or a second stereoscopic display method providing a stereoscopic display by video images of two channels.

**19.** The digital broadcast receiver according to claim 18, wherein said display method determined by said control means (10) is said first stereoscopic display method or said second stereoscopic display method selected by said user when said determining means (24) determines that the video data is in accordance with said stereoscopic broadcasting method, and the display method is a display method other than said first and second stereoscopic display methods, regardless of said user's selection, when said determining means determines that the video signal is not in accordance with said stereoscopic broadcasting method.

**20.** The digital broadcast receiver according to claim 18, wherein

said formatting means (25) includes

first storing means (12) for storing an output of said receiving means (1,2) and from which said stored data is read under the control of said control means (10),

second storage means (13) for storing an output of said receiving means (1,2), and from which said stored data is read under the control of said control means (10), different from said first storing means (12),

input switching means (11) for inputting an output of said receiving means (1,2) to said first storing means (12) or said second storing means (13) under the control of said control means (10),

level data output means (14, 15) for generating and outputting level data,

first data switching means (16) for switching between and outputting the data read from said first storage means (12) and said level data output from said level data output means (14, 15) under the control of said control means (10), and

second data switching means (17) for switching between and outputting the data read from said second storing means (13) and said level data output from said level data output means (14, 15) under the control of said control means (10);

said first data switching means (16) outputs data corresponding to said video images of said one channel corresponding to said first stereoscopic display method or data corresponding to said video images of either one of said two channels corresponding to said second stereoscopic display method, or data corresponding to said display method different from said first and second stereoscopic display methods; and

said second data switching means (17) outputs data corresponding to said video image of the other one of said video images of said two channels corresponding to said second stereoscopic display method.

**21.** The digital broadcast receiver according to claim 20, wherein said first storage means (12) and said second storing means (13) are FIFO memories.

**22.** The digital broadcast receiver according to claim 16, wherein said video data corresponding to said stereoscopic broadcasting method includes an image plane for a right eye video image obtained by interlace scanning method and an image plane of a left eye video image obtained by interlace scanning method.

**23.** A video data recording apparatus, comprising:

video signal processing means (123a, 123b, 120) for forming video data of one channel by arranging an image corresponding to a first video signal and an image corresponding to a second video signal different from each other, divided into upper and lower portions of one image plane;

compressing means (122) for compressing said video data; and

recording means (129) for recording said compressed video data on a recording medium.

24. A video data reproducing apparatus for reproducing from a recording medium, video data of one channel formed by arranging an image corresponding to a first video signal and an image corresponding to a second video signal different from each other divided into upper and lower portions of one image plane, compressed and recorded, comprising:

reproducing means (29) for reproducing said compressed video data from said recording medium;

decompression means (2) for decompressing said reproduced compressed video data; and

video recovery means receiving said decompressed video data for recovering said first video signal and said second video signal.

25. A video data recording and reproducing apparatus, comprising:

video signal processing means (123a, 123b, 120) for forming video data of one channel by arranging an image corresponding to a first video signal and an image corresponding to a second video signal different from each other divided into upper and lower portions of one image plane;

compressing means (122) for compressing said video data;

recording means (29, 129) for recording said compressed video data on a recording medium;

reproducing means (29, 129) for reproducing said compressed video data input from said recording medium;

decompressing means (2) for decompressing said reproduced compressed video data; and

video recovery means (5, 25) receiving said decompressed video data for recovering said first video signal and said second video signal.

# FIG. 1A

I=1~704

J=1~480

# FIG. 1B

I=1~704

J=1~240

B1

J=241~480

B2

## FIG. 2

EP 1 024 672 A1

FIG. 3A

I=1~704

J=1~240

R

FIG. 3B

I=1~704

J=1~240

L

FIG. 3C

I=1~704

B1

B2

J=1~480

VIDEO DATA

FIG. 4

EP 1 024 672 A1

FIG. 5

## FIG. 6A

I=1~704

J=1~480

AR1

AR2

## FIG. 6B

I=1~704

J=1~240

J=241~480

AR1

B1

AR2

B2

## FIG. 7

4

ADDRESS VALUE ad ——— L1 →

PIXEL DATA ———
L2

60

CPU

→ CONTROL
SIGNAL CON

↕

MEMORY

61

## FIG. 8

```
                    START

                                    S1
        OBTAIN ADDRESS VALUE ad

                                    S2
                  ADDRESS
   NO           OF AREA TO BE
                 COMPARED?

                      YES
                                    S3
     STORE PIXEL DATA CORRESPONDING TO
     ADDRESS VALUE ad IN MEMORY 61

                                    S4
                 ALL PIXEL DATA
   NO            TO BE COMPARED
                   OBTAINED?

                      YES           S5
     COMPARE PIXEL DATA
     (OUTPUT DIFFERENCE VALUE)

                                    S6
   YES          NOT SMALLER         NO
               THAN REFERENCE
                   VALUE

         S7                                  S8
   SET CONTROL SIGNAL CON      SET CONTROL SIGNAL CON
   TO STEREOSCOPIC             TO BROADCASTING METHOD 1
   BROADCASTING METHOD


                    END
```

EP 1 024 672 A1

**FIG. 9**

**FIG. 10**

25

FROM FRAME MEMORY 3

INPUT SWITCHING CIRCUIT 11

CONTROL CIRCUIT 10

AS
BS

MEMORY 12

SYNCHRONIZING SIGNAL LEVEL DATA OUTPUT CIRCUIT 14

PEDESTAL LEVEL DATA OUTPUT CIRCUIT 15

MEMORY 13

DATA SWITCHING CIRCUIT 16

DATA SWITCHING CIRCUIT 17

DB

DA

D/A CONVERTER 18

D/A CONVERTER 19

## FIG. 11

ONE HORIZONTAL PERIOD

T0　　T1　　T2　　T3　　T4　　T5　　(t)

EP 1 024 672 A1

FIG. 12A

G(1) G(2) G(3) G(4)

(B1) (B2)  (B1) (B2)  (B1) (B2)  (B1) (B2)

FIG. 12B

G(1) G(2) G(3) G(4)

B1  B2   B1  B2   B1  B2   B1  B2

FIG. 12C

G(1) G(2) G(3) G(4)

B1   B1   B1   B1

FIG. 12D

G(1) G(2) G(3) G(4)

B2   B2   B2   B2

## FIG. 13A

L

R

B 1
B 2

## FIG. 13B

L

L – R

B 1
B 2

## FIG. 13C

A

B

B 1
B 2

## FIG. 13D

360

120

L

R

B 1
B 2

## FIG. 13E

360

120

L

L – R

B 1
B 2

EP 1 024 672 A1

## FIG. 14A

## FIG. 14B

## FIG. 14C

FIG. 15

EP 1 024 672 A1

FIG. 16A

(B1) | (B2)  (B1) | (B2)  (B1) | (B2)

(1/FR1)

ONE IMAGE PLANE  ONE IMAGE PLANE  ONE IMAGE PLANE

FIG. 16B

B1  B2  B1  B2  B1  B2

(1/FR2)

# FIG. 17

EP 1 024 672 A1

FIG. 18A
BROADCASTING
METHOD 2

FIG. 18B
STEREOSCOPIC
BROADCASTING
METHOD

FIG. 18C CLK

FIG. 18D TS

FIG. 18E RT

FIG. 18F CS

EP 1 024 672 A1

## FIG. 19

```
                    ┌──────────────┐
                    │    START     │
                    └──────────────┘
                           │
                           │        ┌─ S11
                         ╱   ╲
                       ╱  OBTAIN ╲
                     ╱ VERTICAL SYNCHRONIZING ╲ ── NO ──────────┐
                       ╲   SIGNAL   ╱                           │
                         ╲        ╱                             │
                           │ YES                                │
                           │        ┌─ S12                      │
                     ┌───→╱   ╲                                 │
                     │   ╱      ╲                               │
                   NO │ ╱ OBTAIN CS ╲                           │
                     └──╲          ╱                            │
                         ╲        ╱                             │
                           │ YES                                │
                           │    ┌─ S13                 ┌─ S17    │
            ┌──────────────────────────────┐   ┌──────────────────────────────┐
            │  OBTAIN CNT AND COMPARE       │   │  DETERMINE AS                │
            │  WITH REFERENCE VALUE TH      │   │  BROADCASTING METHOD 1       │
            └──────────────────────────────┘   └──────────────────────────────┘
                           │                                    │
                           │    ┌─ S14                          │
                         ╱   ╲                                  │
                       ╱       ╲                                │
                     ╱  CNT<TH   ╲ ── NO ──┐                    │
                       ╲         ╱         │                    │
                         ╲     ╱           │                    │
                           │ YES           │                    │
                           │  ┌─ S15       │  ┌─ S16            │
                 ┌──────────────────┐  ┌──────────────────┐     │
                 │  DETERMINE AS    │  │  DETERMINE AS     │     │
                 │  BROADCASTING    │  │  STEREOSCOPIC     │     │
                 │  METHOD 2        │  │  BROADCASTING     │     │
                 │                  │  │  METHOD           │     │
                 └──────────────────┘  └──────────────────┘     │
                           │              │                     │
                           └──────────────┴─────────────────────┘
                                   │
                            ┌──────────────┐
                            │     END      │
                            └──────────────┘
```

## FIG. 20

35

CTL ⟶ DISPLAY SWITCHING CIRCUIT ⟶ DISPLAY UNIT

50

51

## FIG. 21

36

(R, G, B) SIGNAL FROM SIGNAL PROCESSING CIRCUIT 32 ⟶ REPRODUCTION AN DISPLAY SELECTING CIRCUIT ⟶ DRIVING CIRCUIT ⟶ MONITOR

(R, G, B) SIGNAL FROM SIGNAL PROCESSING CIRCUIT 31 ⟶

70

71

72

CTL

# INTERNATIONAL SEARCH REPORT

| | |
|---|---|
| International application No. | |
| PCT/JP98/00910 | |

**A. CLASSIFICATION OF SUBJECT MATTER**
Int.Cl⁶ H04N13/04

According to International Patent Classification (IPC) or to both national classification and IPC

**B. FIELDS SEARCHED**

Minimum documentation searched (classification system followed by classification symbols)
Int.Cl⁶ H04N13/00, 13/04

Documentation searched other than minimum documentation to the extent that such documents are included in the fields searched

Jitsuyo Shinan Koho          1937-1996     Jitsuyo Shinan Toroku Koho     1996-1997
Kokai Jitsuyo Shinan Koho    1971-1996

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP, 7-255068, A (Sony Corp.),<br>October 3, 1995 (03. 10. 95) (Family: none) | 1-6, 23-25 |
| X | JP, 8-331599, A (Sanyo Electric Co., Ltd.),<br>December 13, 1996 (13. 12. 96) (Family: none) | 1-6 |
| X | JP, 7-298310, A (Canon Inc.),<br>November 10, 1995 (10. 11. 95) (Family: none) | 1-6 |
| X | JP, 3-295393, A (Hitachi, Ltd.),<br>December 26, 1991 (26. 12. 91) (Family: none) | 1-6 |
| X | JP, 60-7291, A (Matsushita Electric Industrial Co., Ltd.),<br>January 16, 1985 (16. 01. 85) (Family: none) | 1-6 |
| X<br>Y | JP, 64-47196, A (Matsushita Electric Industrial Co., Ltd.),<br>February 21, 1989 (21. 02. 89) (Family: none) | 7-10<br>11-14 |

☒ Further documents are listed in the continuation of Box C.       ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| "O" | document referring to an oral disclosure, use, exhibition or other means | "Y" | document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" | document member of the same patent family |

| Date of the actual completion of the international search | Date of mailing of the international search report |
|---|---|
| June 16, 1998 (16. 06. 98) | June 30, 1998 (30. 06. 98) |

| Name and mailing address of the ISA/ | Authorized officer |
|---|---|
| Japanese Patent Office | |
| Facsimile No. | Telephone No. |

Form PCT/ISA/210 (second sheet) (July 1992)

INTERNATIONAL SEARCH REPORT

International application No.

PCT/JP98/00910

C (Continuation). DOCUMENTS CONSIDERED TO BE RELEVANT

| Category* | Citation of document, with indication, where appropriate, of the relevant passages | Relevant to claim No. |
|---|---|---|
| Y | JP, 61-35368, A (Rohm Co., Ltd.),<br>February 19, 1986 (19. 02. 86) (Family: none) | 11-14 |
| X<br>Y<br>A | JP, 1-93993, A (Sharp Corp.),<br>April 12, 1989 (12. 04. 89) (Family: none) | 15, 17, 22<br>18<br>16, 19-21 |
| Y | JP, 9-27968, A (Hitachi Electronics, Ltd.),<br>January 28, 1997 (28. 01. 97) (Family: none) | 18 |

Form PCT/ISA/210 (continuation of second sheet) (July 1992)